# EUROPEAN PATENT SPECIFICATION

(11) **EP 2 008 916 B1**
(45) Date of publication and mention of the grant of the patent: **29.12.2010**
(21) Application number: 08159234.7
(22) Date of filing: 27.06.2008
(51) Int. Cl.: B62D 33/00

(54) **Frame with support profiles for a utility vehicle structure**
Rahmen mit Stützprofilen für die Struktur eines Nutzfahrzeugs
Cadre avec profilés d'appui pour structure de véhicule utilitaire

(30) Priority: 29.06.2007 DE 102007030461
(43) Date of publication of application: 31.12.2008
(73) Proprietor: Iveco Magirus AG, 89079 Ulm (DE)
(72) Inventor: Fitz, Harald, 77948 Friesenheim (DE)
(74) Representative: Borsano, Corrado

(56) References cited:
- EP-A- 1 136 347
- WO-A-2006/020945
- DE-A1- 19 540 787
- US-A- 5 131 714
- US-A1- 2006 037 760
- US-B1- 6 398 261

## Description

The present invention concerns a frame with support profiles for the vehicle structure of a utility vehicle, especially a fire engine or similar.

Such vehicles frequently comprise a plurality of functional components and modules for assembly on the vehicle structure. To this end, the prior art teaches that the components can be joined together using support profiles which form part of the vehicle chassis, or are rigidly connected thereto. In this manner one can construct, for example, a support frame whose frame components are joined together by welded connections.

In some vehicle types, especially fire engines, it is desirable to be able to arrange the functional units within the vehicle structure in a flexible manner, so that the same basic vehicle type can be fitted out with different components as required. With the conventional assembly method this is difficult, however, as the prior art support profiles are not designed to accommodate varying arrangements of the individual modules. Neither, thus far, are there any profiles allowing a largely free design of the shape and size of the basic frame constructed from the profiles, without requiring substantial modifications to such profiles.

According to prior art patent document DE 19540787 A1, it's known a frame with support profiles each provided with a body with an essentially box-shaped cross section and two parallel flanges projecting laterally from the body, which extend in the longitudinal direction of body along the latter.

On EP 1136347 A1, it's also known a frame with support profiles with a profile body and two flanges projecting laterally from this profile body, with flanges and a wall of profile body lying opposite flanges being provided with slots for accommodating fixing means.

On US 5131714 A1, it's also known a frame for the vehicle structure of a utility vehicle, especially a fire engine or similar, in which the support profile comprises a profile body with an essentially box-shaped cross section and two parallel flanges projecting laterally from this profile body, which extend in the longitudinal direction of profile body along the latter, with flanges and a wall of profile body lying opposite flanges being provided with openings for accommodating fixing means, said openings being spaced at a distance from each other in the longitudinal direction of profile body. Traverse struts are provided for connecting each other two of said support profiles by inserting said traverse struts into a space defined between said flanges of each one of said two support profiles, and add-on components to attach said support profile to the vehicle chassis.

Hence the task of this invention is to provide a frame with support profiles of the aforementioned type, on which the functional units of the vehicle can be disposed and fixed in a more flexible manner than is the case with prior art constructions. A further purpose of this invention is to provide support profiles suitable for constructing basic frames of differing shapes and sizes, without the need for substantial modifications to the profiles themselves.

These tasks are solved according to the invention by means of a basic frame with the features of claim 1.

The support profile according to the invention comprises a basic body contrived as an elongated profile body with an essentially box-shaped cross section. This profile body provides the necessary stability and flexural strength of the support profile. Two parallel flanges projecting laterally from the profile body, which extend along the profile body in its longitudinal direction, offer a variety of fixing options. They are provided with openings, disposed at a distance from each other in the longitudinal direction of the profile body, to accommodate fixing means such as bolts or similar. Further openings are provided in a wall of the profile body located opposite the flanges.

The flanges accommodate the ends of traverse struts connecting two parallel support profiles. This means that two support profiles according to the invention, and two traverse struts, can be joined up to form a rectangular basic frame. The number of openings in the flanges offers a choice of fixation options for the traverse struts, so that basic frames of different lengths can be put together very easily. The support profiles themselves need only be shortened to the required length. The width of this basic frame is determined by the length of the traverse struts.

The openings in the flanges and in the profile wall located opposite the flanges provide a grid for a particularly flexible arrangement of the individual functional components to be assembled on this basic frame, such as, for example, water tanks, equipment holders, pump components or similar. Equally, additional elements for fixing the functional components to the basic frame, or for fixing the basic frame to a vehicle chassis, can be attached as desired to the support profiles. Thus the support profile according to the invention can be used not only in different vehicle types, but also for structures of varying sizes with differing arrangements of functional components.

Preferred embodiments of the support profile according to the invention can be derived from the sub-claims.

A preferred embodiment of the invention will be described in more detail below with reference to the drawings, in which
Fig. 1 is a perspective view of a section of an embodiment of the support profile according to the invention;
Fig. 2 shows the section of support profile according to Fig. 1 from a different perspective;
Fig. 3 is a front view of the support profile section of Fig. 1 and 2;
Fig. 4 is a top-plan view of the support profile section of Fig. 1 to 3;
Fig. 5 is a side view of the support profile section of Fig. 1 to 4; and
Fig. 6 is a diagrammatic view showing the use of the support profile of

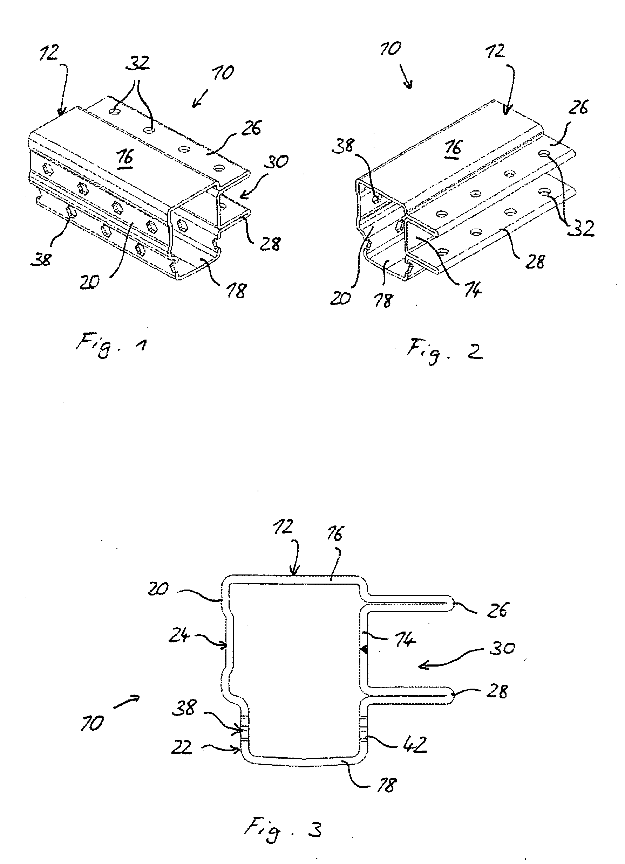

Fig. 1 to 5 for assembling a basic frame.

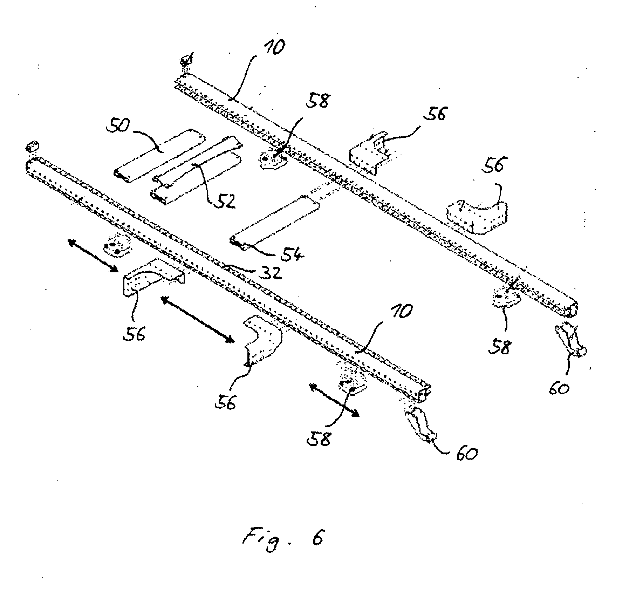

The support profile 10 shown in Figures 1 to 5 comprises an elongated profile body 12, with an essentially box-shaped cross section, as can clearly be seen in e.g. Fig. 3. The wall of profile body 12 located on the right in Figures 1 to 4, will be referred to below as the inner wall 14, according to its orientation in a basic frame made from two parallel support profiles 10 and perpendicular traverse struts, as shown in Fig. 6. Adjoining the upper and lower edges of inner wall 14 there are a ceiling 16 and a floor 18 to profile body 12, essentially positioned perpendicular to inner wall 14. Profile body 12 is completed by an outer wall 20, positioned opposite inner wall 14, which is not entirely flat, but has an inward graduation 22 in its lower section. Further, in a portion located above the latter, outer wall 20 has a strip-shaped section 24, which also projects inwardly. Shaping profile body 12 in this way gives support profile 10 a high degree of flexural and torsional strength.

Projecting from inner wall 14 of profile body 12, there are two flanges 26,28, which are flat, parallel to each other and perpendicular to inner wall 14. Flanges 26,28 extend along profile body 12 in the longitudinal direction and between them, delimit a channel-shaped intermediate space 30 with an approximately quadratic cross section. Disposed in each of flanges 26,28 there is a row of openings 32, serving to accommodate fixing means such as bolts or similar. The rows of openings 32 run parallel in both flanges 26,28 in the longitudinal direction of profile body 12, and openings 32 are spaced evenly along each row. The pairs of openings 32 in the parallel flanges 26,28 are each positioned precisely above each other, i.e. they are disposed along an imaginary axis running perpendicular to the planes of flanges 26,28 and the direction in which profile body 12 extends. The phrase "above each other" need not, therefore, be restricted to a support profile 10 position in which the direction in which profile body 12 extends lies along a horizontal plane, as will be the case in one envisaged use of this support profile 10 in a basic vehicle frame. It is intended merely to indicate that openings 32 in flanges 26,28 are aligned in such a way that, for example, a fixing element can be inserted through both openings 32 and intermediate space 30, straight through flanges 26,28, in contrast to an offset arrangement of openings 32 in the longitudinal direction of flanges 26,28.

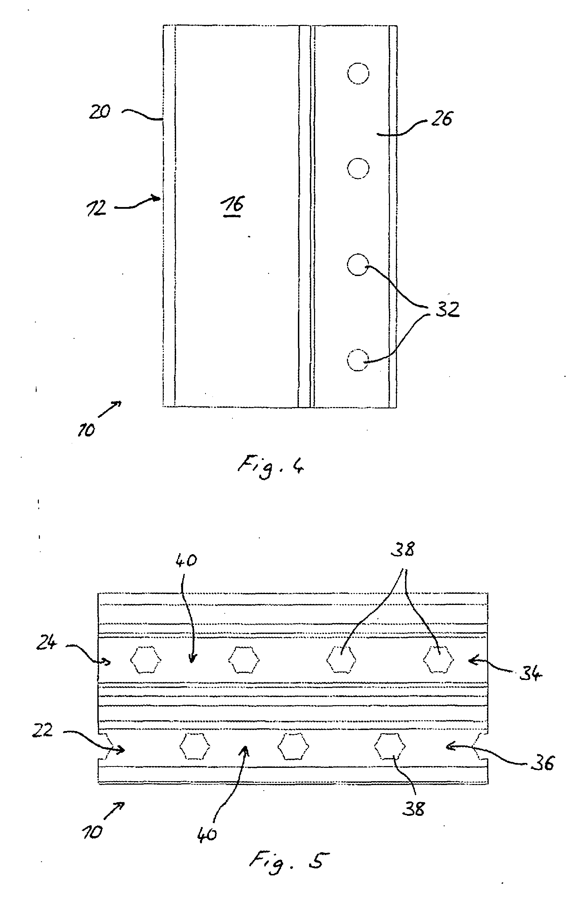

In outer wall 20 of profile body 12 there are also two parallel rows 34,36 of openings 38, as can clearly be seen in Fig. 5, in particular. The top row 34 lies in the top, inwardly projecting strip section 24, whilst the bottom row, 36, runs along the bottom graduation 22 in wall 20. Both rows 34,36 extend along the longitudinal direction of profile body 12. Openings 38 are equally spaced in each row 34,36, and the distance 40 between the openings in both rows 34,36 is identical. Openings 38 in rows 34,36 are not, however, disposed above each other, as is the case in flanges 26,28, but are offset in relation to each other. The offset distance between an opening 38 in the top row, 34, and an opening 38 in the bottom row, 36, is half the length of distance 40.

Another row of openings 38 is disposed in inner wall 14 underneath the bottom flange 28. Openings 38 in this row 42 are also spaced at an equal distance from each other. This row 42 lies exactly opposite the lower row of holes 36 in outer wall 20, i.e. rows 36 and 42 are positioned at the same height, as can be seen in Fig. 3. Further, openings 38 in rows 36 and 42 are exactly aligned with each other, like the two rows of holes in flanges 26 and 28, so that a fixing element such as a bolt can be inserted through profile body 12 perpendicular to the direction in which the latter extends.

Fig. 6 shows a use of support profile 10 in a vehicle structure. Two such support profiles 10 are disposed in parallel and extend in the longitudinal direction, i.e. in the direction of travel of a utility vehicle, such as a fire engine, not shown in more detail. Traverse struts 50,52, which extend in the crosswise direction, serve to connect the two support profiles 10 by their flanges 26,28. To this end, traverse struts 50,52 are provided at their ends with openings 54, which are to be aligned with openings 32 in flanges 26,28 when the ends of traverse struts 50,52 are inserted into intermediate space 30 between flanges 26,28. The connection can be accomplished by inserting fixing means such as bolts, rivets or similar into the respective openings. As can clearly be seen in Fig. 6, the arrangement of traverse struts 50, 52 along support profiles 10 can, in principle, be chosen to suit, so that one constructs a basic frame of a freely chosen length, formed by the two support profiles 10 along its longitudinal edges and by at least two traverse struts 50,52. Fig. 6 also shows other component parts 56, which can be attached to outer walls 20 of support profiles 10. Add-on components 56 also have openings which can be aligned with the openings in at least one row 34 and/or 36 of outer wall 20, so that a fixing means can be inserted through openings 38. Add-on components 56 can, for example, be used to attach a functional unit of a fire engine, such as a tank, or a device for accommodating rescue or extinguishing equipment, or similar. In this respect the basic frame built from support profiles 10 and traverse struts 50,52 can be designed very flexibly, without the need for substantial modifications to the basic shape of support profile 10, except for shortening it to the required length as necessary.

Further add-on components 58,60, serving to connect the basic frame to the vehicle chassis, can be added to support profiles 10 from underneath in that they wrap around profile body 12 from underneath. A firm connection is then achieved with fixing means which are inserted through corresponding openings in add-on components 58,60 and into openings 38 in profile body 12.

The rows of openings 32,38 in flanges 26,28, and in profile body 12, thus offer a grid allowing adjustment of the frame size and relatively free positioning of functional units within the vehicle structure.

## Claims

1. Basic frame for a vehicle structure of a utility vehicle, especially a fire engine or similar, comprising : two support profiles (10) disposed in parallel and expended in the longitudinal direction, i.e. in the direction of travel of said utility vehicle, each said support profile (12) defined by a profile body (12) with an essentially box-shaped cross section and two parallel flanges (26,28) projecting laterally from this profile body (12), which extend in the longitudinal direction of profile body (12) along the latter, with flanges (26,28) and a wall (20) of profile body (12) lying opposite flanges (26,28) being provided with openings (32,38) for accommodating fixing means, said openings being spaced at a distance from each other in the longitudinal direction of profile body (12); traverse struts (50,52) for connecting said two support profiles (10) by said flanges (26,28), said traverse struts (50 ,52) extending in the crosswise direction and provided at their ends with openings, said openings being aligned with openings in said flanges (26,28) when the ends of said traverse struts (50 ,52) are inverted into an intermediate space defined between said flanges (26,28); and add-on components (56) attached to the outer walls (20) of the support profiles (10) to attach a functional unlit of for example a fire engine; the basic frame being **characterized in that** it comprises further add-on components (58,60) to connect the basic frame to a vehicle chassis and are added to said support profiles (10) from underneath, wrapping aground said profile body (12) from underneath; fixing means being inverted through corresponding openings in said further add-on components (58,60) and into said openings (38) of said profile body (12) for a firm connection.

2. Basic frame of claim 1, **characterised in that** openings (32) in parallel flanges (26,28) are aligned above each other.

3. Basic frame of claims 1 or 2, **characterised in that** a row of equally spaced openings (32) is disposed in each flange (26,28).

4. Basic frame of one of the preceding claims, **characterised in that** in the wall (20) of profile body (12) opposite flanges (26,28) there is at least one row (34,36) of equally spaced openings (38) extending in the longitudinal direction of profile body (1 2).

5. Basic frame of claim 4, **characterised in that** in the wall (20) of profile body (12) opposite the flanges, there are two parallel rows (34,36) of equally spaced openings (38) extending in the longitudinal direction of profile body (12), whose openings (38) are offset in relation to each other by half the distance between openings.

## Patentansprüche

1. Grundrahmen für eine Fahrzeugstruktur eines Nutzfahrzeuges, insbesondere eines Feuerwehrautos oder ähnliches, umfassend: zwei Stützprofile (10), die parallel und sich in Längsrichtung erstreckend angeordnet sind, d.h. in der Fahrtrichtung des Nutzfahrzeuges, wobei jedes Stützprofil (12), das durch eine Profilkörper (12) mit einem im Wesentlichen kastenförmigen Querschnitt und zwei parallelen Flanschen (26, 28) gebildet ist, die seitlich von diesem Profilkörper (12) hervorstehen und die sich in der Längsrichtung des Profilkörpers (12) entlang Letzterem erstrecken, wobei die Flansche (26, 28) und eine Wand (20) des Profilkörpers (12), die den Flanschen (26, 28) gegenüberliegt, mit Öffnungen (32, 38) zum Aufnehmen von Befestigungsmittel ausgestattet sind, wobei die Öffnungen in einem Abstand von einander in der Längsrichtung des Profilkörpers (12) beabstandet sind; Querverstrebungen (50, 52), um die zwei Stützprofile (10) durch die Flansche (26, 28) zu verbinden, wobei sich die Querverstrebungen (50, 52) in der Querrichtung erstrecken und an ihren Enden mit Öffnungen ausgestattet sind, wobei die Öffnungen mit den Öffnungen in den Flanschen (26, 28) ausgerichtet sind, wenn die Enden der Querverstrebungen (50, 52) in einen Zwischenraum eingeführt werden, der zwischen den Flanschen (26, 28) gebildet ist; und Zusatzkomponenten (56), die an den Außenwänden (20) der Stützprofile (10) befestigt sind, um eine Funktionseinheit beispielsweise eines Feuerwehrfahrzeuges anzuschließen; wobei der Grundrahmen **dadurch gekennzeichnet ist, dass** er weitere Zusatzkomponenten (58, 60) umfasst, um den Grundrahmen mit einem Fahrwerk zu verbinden, die an den Stützprofilen (10) von unten hinzugefügt sind, um sich von unten um den Profilkörper (12) zu legen, wobei Befestigungsmittel durch entsprechende Öffnungen in den weiteren Zusatzkomponenten (58, 60) und in die Öffnungen (38) des Profilkörpers (12) für eine feste Verbindung eingesetzt sind.

2. Grundrahmen nach Anspruch 1, **dadurch gekennzeichnet, dass** die Öffnungen (32) in parallelen Flanschen (26, 28) übereinander ausgerichtet sind.

3. Grundrahmen nach Anspruch 1 oder 2, **dadurch gekennzeichnet, dass** eine Reihe von gleichmäßig beabstandeten Öffnungen (32) in jedem Flansch (26, 28) angeordnet ist.

4. Grundrahmen nach einem der vorhergehenden Ansprüche, **dadurch gekennzeichnet, dass** es in der Wand (20) des Profilkörpers (12) den Flanschen (26, 28) gegenüberliegend wenigstens eine Reihe (34, 36) von gleichmäßig beabstandeten Öffnungen (38) gibt, die sich in Längsrichtung von dem Profilkörper (12) erstrecken.

5. Grundrahmen nach Anspruch 4, **dadurch gekennzeichnet, dass** es in der Wand (20) des Profilkörpers (12) den Flanschen gegenüberliegend zwei parallele Reihen (34, 36) von gleichmäßig beabstandeten Öffnungen (38) gibt, die sich in Längsrichtung von dem Profilkörper (12) erstrecken, dessen Öffnungen (38) in Bezug zu einander um den halben Abstand zwischen den Öffnungen versetzt sind.

## Revendications

1. Châssis de base pour une structure de véhicule d'un véhicule utilitaire, en particulier un camion d'incendie ou similaire, comprenant : deux profils de support (10) disposés en parallèle et étendus dans la direction longitudinale, c'est-à-dire dans la direction de déplacement dudit véhicule utilitaire, chacun desdits profils de support (12) étant défini par un corps de profil (12) avec une section transversale essentiellement en forme de boîtier et deux rebords parallèles (26, 28) faisant saillie latéralement de ce corps de profil (12), qui s'étendent dans la direction longitudinale du corps de profil (12) le long de ces derniers, avec les rebords (26, 28) et une paroi (20) du corps de profil (12) qui sont opposés aux rebords (26, 28), qui sont prévus avec des ouvertures (32, 38) pour loger des moyens de fixation, lesdites ouvertures étant espacées à une certaine distance les unes des autres dans la direction longitudinale du corps de profil (12) ; des entretoises transversales (50, 52) pour raccorder lesdits deux profils de support (10) par lesdits rebords (26, 28), lesdites entretoises transversales (50, 52) s'étendant dans la direction transversale et prévues au niveau de leurs extrémités avec des ouvertures, les ouvertures étant alignées avec les ouvertures dans lesdits rebords (26, 28) lorsque les extrémités desdites entretoises transversales (50, 52) sont insérées dans un espace intermédiaire défini entre lesdits rebords (26, 28) ; et des composants complémentaires (56) fixés sur les parois externes (20) des profils de support (10) pour fixer une unité fonctionnelle par exemple d'un camion d'incendie ; le châssis de base étant **caractérisé en ce qu'**il comprend en outre des composants complémentaires (58, 60) pour raccorder le châssis de base à un châssis de véhicule, et sont ajoutés auxdits profils de support (10) par en dessous, s'enroulant autour dudit corps de profil (12) depuis dessous ; des moyens de fixation étant insérés à travers les ouvertures correspondantes dans lesdits composants complémentaires supplémentaires (58, 60) et dans lesdites ouvertures (38) dudit corps de profil (12) pour un raccordement ferme.

2. Châssis de base selon la revendication 1, **caractérisé en ce que** les ouvertures (32) dans les rebords parallèles (26, 28) sont alignées les unes des autres.

3. Châssis de base selon les revendications 1 ou 2, **caractérisé en ce qu'**une rangée d'ouvertures (32), espacées à égale distance les unes des autres, est disposée dans chaque rebord (26, 28).

4. Châssis de base selon l'une quelconque des revendications précédentes, **caractérisé en ce que** dans la paroi (20) du corps de profil (12) opposée aux rebords (26, 28), on trouve au moins une rangée (34, 36) d'ouvertures (38) espacées à égale distance les unes des autres, s'étendant dans une direction longitudinale du corps de profil (12).

5. Châssis de base selon la revendication 4, **caractérisé en ce que** dans la paroi (20) du corps de profil (12) opposée aux rebords, il y a deux rangées parallèles (34, 36) d'ouvertures (38) espacées à égale distance les unes des autres, s'étendant dans la direction longitudinale du corps de profil (12), dont les ouvertures (38) sont décalées les unes par rapport aux autres selon la moitié de la distance située entre les ouvertures.
